# FASCICULE DE BREVET EUROPEEN

(11) **EP 2 682 032 B1**
(45) Date de publication et mention de la délivrance du brevet: **15.04.2015**
(21) Numéro de dépôt: 13173889.0
(22) Date de dépôt: 26.06.2013
(51) Int. Cl.: A47J 43/25

(54) **Appareil électromènager de découpe d'aliments avec rangement d'accessoires de découpe d'aliments**
Elektrohaushaltsgerät zum Schneiden von Lebensmitteln mit Ablage für die Zubehörteile zum Schneiden der Lebensmittel
Household appliance for cutting food with storage of food cutting accessories

(30) Priorité: 02.07.2012 FR 1256335
(43) Date de publication de la demande: 08.01.2014
(73) Titulaire: SEB S.A., 69130 Ecully (FR)
(72) Inventeur: Lafond, Jean-Marie, 65420 IBOS (FR); Smit, Robert, 65290 LOUEY (FR); Payras, Lionel, 65100 LOURDES (FR)
(74) Mandataire: Cémeli, Eric Philippe Laurent

(56) Documents cités:
- EP-A1- 2 159 014
- EP-A1- 2 438 841
- WO-A1-2012/017153

## Description

La présente invention concerne le domaine technique des appareils électroménagers de découpe d'aliments.

La présente invention concerne plus particulièrement les appareils prévus comportant plusieurs accessoires de découpe d'aliments.

La présente invention concerne notamment les appareils prévus pour réaliser des découpes d'aliments en cubes ou en morceaux.

Le document EP 2 159 014 divulgue un appareil électroménager de découpe d'aliments comportant un capot de rangement prévu pour loger plusieurs accessoires de découpe d'aliments. Toutefois cet appareil est prévu pour réaliser des préparations de type râpés ou émincés.

Le document WO 2012/017153 divulgue un appareil électroménager de découpe d'aliments prévu pour réaliser des préparations de type cubes ou bâtonnets, comportant un élément rotatif de découpe utilisé avec un élément statique de découpe. Toutefois cet appareil ne propose pas de solution de rangement d'autres accessoires de découpe d'aliments.

Un objet de la présente invention est de proposer un appareil électroménager de découpe d'aliments prévu pour réaliser différents types de découpe, dans lequel le rangement des accessoires de découpe d'aliments est facilité.

Un autre objet de la présente invention est de proposer un appareil électroménager de découpe d'aliments comportant un élément statique de découpe et plusieurs éléments rotatifs de découpe, dans lequel le rangement des accessoires de découpe d'aliments est facilité.

Ces objets sont atteints avec un appareil électroménager de découpe d'aliments comportant une base motorisée solidaire d'un magasin pour recevoir un outil de découpe comportant un élément rotatif de découpe et un élément statique de découpe, l'élément rotatif de découpe comportant des premiers moyens de découpe et des moyens d'accouplement à un dispositif d'entrainement en rotation agencé dans le logement, l'élément statique de découpe comportant des seconds moyens de découpe et des moyens de blocage pour venir en prise en position fixe avec le magasin, l'élément statique de découpe présentant une forme permettant son insertion à l'intérieur de l'élément rotatif de découpe monté dans le logement de sorte que les seconds moyens de découpe recoupent au moins une partie des aliments découpés par les premiers moyens de découpe, du fait que l'appareil comporte un capot de verrouillage présentant des moyens d'accrochage pour venir en prise avec le magasin en logeant l'élément rotatif de découpe empilé dans au moins un autre élément rotatif de découpe, et que l'élément statique de découpe comporte des moyens de retenue pour venir en prise avec le capot de verrouillage de sorte que les seconds moyens de découpe sont au moins partiellement insérés à l'intérieur de l'élément rotatif de découpe. Ainsi un appareil permettant de réaliser différents types de découpes peut présenter un rangement compact et aisément accessible des différents accessoires de découpe d'aliments incluant un élément statique de découpe.

Selon une forme de réalisation avantageuse, les moyens de retenue viennent en prise avec au moins un organe de retenue extérieur du capot de verrouillage. Cette disposition permet de faciliter l'insertion de l'élément statique de découpe dans le capot de verrouillage.

Avantageusement alors, les moyens de retenue viennent en prise avec une partie supérieure du capot de verrouillage. Cette disposition permet de faciliter la mise en place des moyens de retenue sur le capot de verrouillage.

Avantageusement encore, l'organe de retenue extérieur entoure une extrémité du capot de verrouillage. Cette disposition permet de renforcer le capot de verrouillage. Cette disposition permet de plus d'offrir une certaine liberté de positionnement de l'élément statique de découpe lorsque l'organe de retenue extérieur est circulaire.

Avantageusement encore, l'élément statique de découpe présente un conduit de déversement. Cette disposition facilite la réception des aliments découpés en limitant leur dispersion.

Avantageusement encore les moyens de retenue sont issus du conduit de déversement de l'élément statique de découpe. Cette disposition permet de simplifier la construction de l'élément statique de découpe.

Avantageusement alors, le conduit de déversement est délimité par une bordure inférieure et un verrou monté pivotant sur la bordure inférieure suivant un axe X-X', les moyens de retenue comprenant le verrou. Cette disposition permet d'obtenir un maintien efficace de l'élément statique de découpe ainsi qu'une mise en place et un retrait aisés.

Avantageusement alors, les moyens de retenue comprennent la bordure inférieure. Cette disposition permet d'obtenir une meilleure retenue de l'élément statique de découpe.

Avantageusement encore les moyens de retenue de l'élément statique de découpe sur le capot de verrouillage sont choisis parmi les catégories suivantes : moyens de retenue par verrouillage, moyens de retenue par encliquetage, moyens de retenue par vissage, moyens de retenue à baïonnette.

Selon une forme de réalisation préférée, les moyens de retenue forment également les moyens de blocage. Cette disposition permet de simplifier la construction de l'élément statique de découpe. Toutefois, en configuration de rangement, il n'est pas nécessaire que l'élément statique de découpe soit maintenu en position fixe avec le capot de verrouillage, comme avec le magasin en configuration de travail.

Avantageusement encore, les seconds moyens de découpe d'aliments comportent une série de lames s'étendant longitudinalement entre la première extrémité et la seconde extrémité de l'élément rotatif de découpe lorsque l'outil de découpe est monté dans le logement du magasin.

Avantageusement encore, les premiers moyens de découpe comportent au moins un organe de tranchage, pour découper un morceau d'aliment.

Avantageusement encore, les premiers moyens de découpe comportent au moins une série de lames sensiblement perpendiculaires aux génératrices de la paroi de révolution de l'élément rotatif de découpe, pour trancher l'aliment avant une découpe.

Avantageusement encore, le dispositif d'entraînement en rotation comporte un axe apte à coopérer par l'une de ses extrémités avec une sortie d'entraînement de la base motorisée et portant à l'autre de ses extrémités un organe male adapté pour engrener un orifice d'entraînement femelle formé dans la seconde extrémité de l'élément rotatif de découpe.

Avantageusement encore, le magasin présente une extrémité ouverte par laquelle l'outil de découpe est inséré, ladite extrémité ouverte comportant un rebord périphérique circulaire formant un épaulement d'accrochage des moyens de blocage de l'élément statique de découpe. Cette disposition permet de simplifier la réalisation et le montage des éléments rotatifs de découpe.

L'invention sera mieux comprise à l'étude d'un exemple de réalisation, pris à titre nullement limitatif, illustré dans les figures annexées, dans lesquelles :
- la figure 1 est une vue en perspective et en éclaté d'un appareil de préparation culinaire selon l'invention comportant un magasin, un jeu d'outils de découpe tronconiques empilés, un capot de verrouillage et un insert prévu pour coopérer avec au moins l'un des outils de découpe tronconiques,
- la figure 2 est une vue en perspective de l'un des outils de découpe tronconiques, prévu pour coopérer avec l'insert illustré sur la figure 1,
- la figure 3 est une vue en perspective de l'insert prévu pour coopérer avec l'outil de découpe tronconique illustré sur la figure 2,
- la figure 4 est une vue en coupe longitudinale du magasin logeant l'outil de découpe tronconique illustré sur la figure 2 recevant l'insert illustré sur la figure 3,
- la figure 5 est une vue de face du magasin illustré sur la figure 4 logeant l'outil de découpe tronconiques illustré sur la figure 2 recevant l'insert illustré sur la figure 3,
- la figure 6 est une première vue en perspective du capot de verrouillage illustré sur la figure 1,
- la figure 7 est une deuxième vue en perspective du capot de verrouillage illustré sur les figures 1 et 6,
- la figure 8 est une vue en coupe longitudinale du magasin logeant les outils de découpe tronconiques empilés illustrés sur la figure 1, retenus par le capot de verrouillage illustré sur les figures 1, 6 et 7, qui porte l'insert illustré sur les figures 1, 3, 4 et 5,
- la figure 9 est une vue perspective du magasin illustré sur la figure 8, logeant les outils de découpe tronconiques empilés illustrés sur la figure 1, retenus par le capot de verrouillage illustré sur les figures 1, 6 et 7, qui porte l'insert illustré sur les figures 1, 3, 4 et 5.

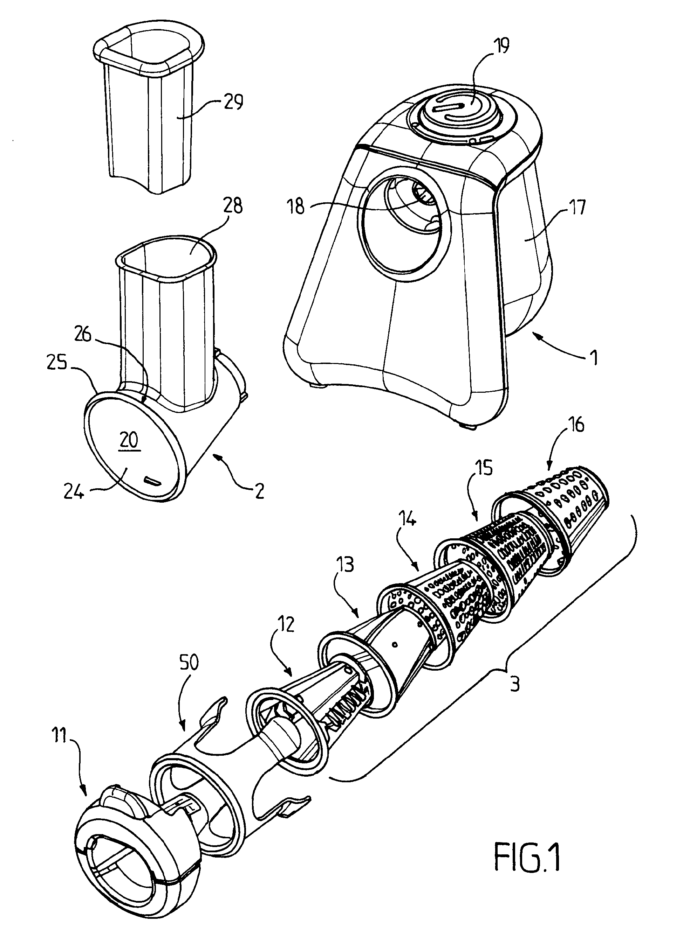

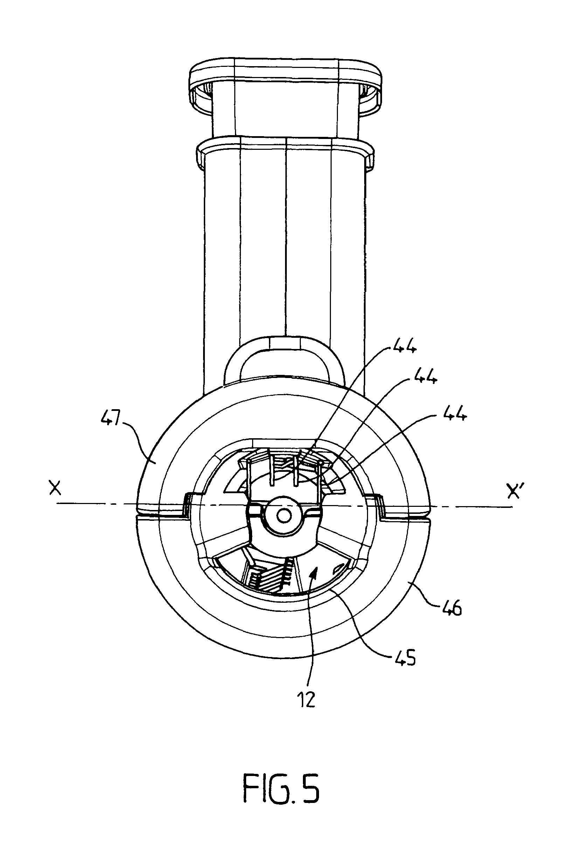

L'appareil électroménager de découpe d'aliments illustré sur les figures 1 à 9 comprend une base motorisée 1, un magasin 2 prévu pour recevoir différents accessoires de découpe d'aliments 3, un capot de verrouillage 50, et un élément statique de découpe 11.

La base motorisée 1 comporte un boîtier 17 logeant un moteur électrique (non représenté) relié à une sortie d'entraînement 18, si désiré par l'intermédiaire d'une transmission à engrenages. Le moteur électrique est associé à des moyens de commande tels que par exemple un bouton rotatif 19.

Tel que représenté sur la figure 1, le magasin 2 est monté amovible sur la base motorisée 1, avec un verrouillage par baïonnette.

Le magasin 2 définit un logement 20 prévu pour le montage des accessoires de découpe d'aliments 3. Le logement 20 présente une configuration tronconique et communique avec un conduit d'introduction d'aliments 28 recevant un poussoir 29. Le magasin 2 présente une extrémité ouverte 24 comportant un rebord périphérique circulaire 25.

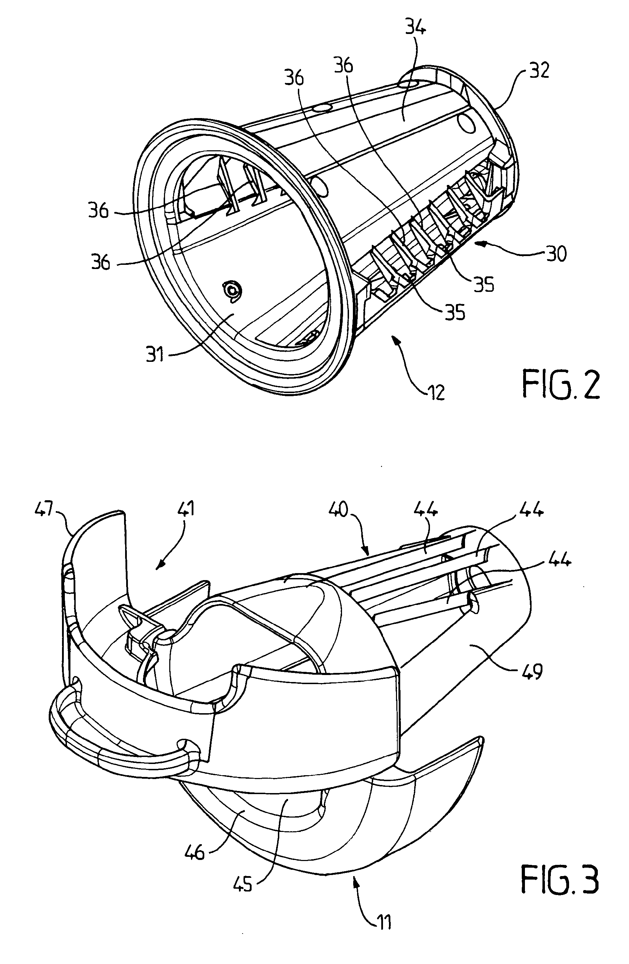

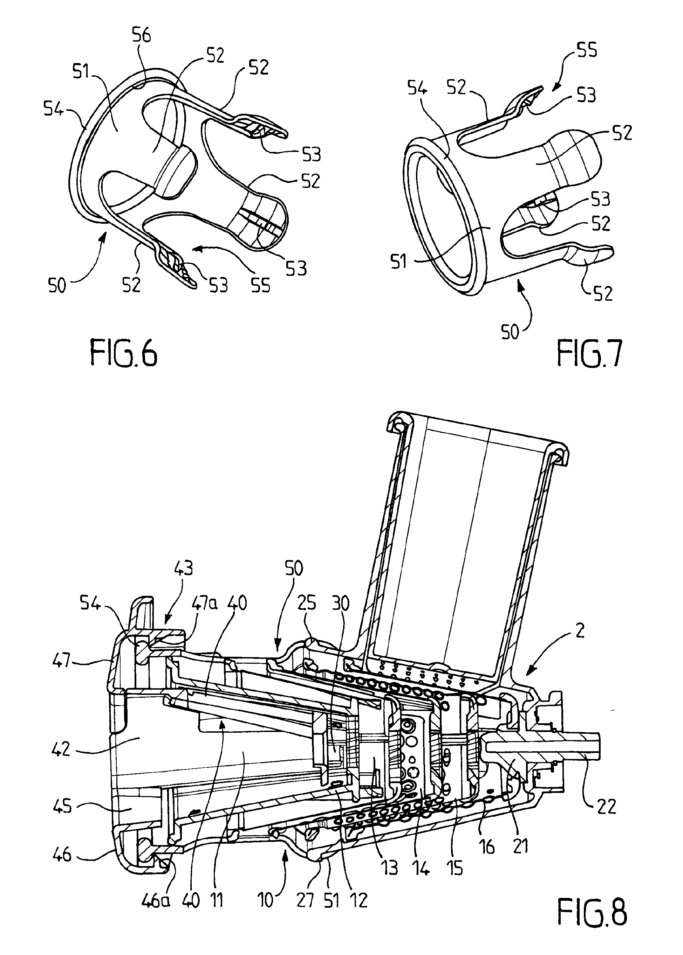

Les accessoires de découpe d'aliments 3 comprennent un élément rotatif de découpe 12, mieux visible sur la figure 2, prévu pour la découpe de bâtonnets, ainsi que d'autres éléments rotatifs de découpe 13, 14, 15, 16 prévus pour trancher, râper ou émincer les aliments. Tel que représenté à la figure 8, l'appareil comporte au moins un autre élément rotatif de découpe 13, 14, 15, 16 dans lequel l'élément rotatif de découpe 12 peut être empilé.

L'élément rotatif de découpe 12 est prévu pour être monté dans le logement 20 afin d'être entraîné en rotation.

Chaque autre élément rotatif de découpe 13, 14, 15, 16 est prévu pour être monté dans le logement 20 à la place de l'élément rotatif de découpe 12, afin d'être entraîné en rotation.

L'élément rotatif de découpe 12 est associé à l'élément statique de découpe 11 pour former un outil de découpe 10 permettant d'obtenir des découpes en morceaux, voire des découpes de type cubes.

L'invention concerne l'appareil électroménager de découpe d'aliments comportant la base motorisée 1 solidaire du magasin 2 pour recevoir l'outil de découpe 10 comportant l'élément rotatif de découpe 12 et l'élément statique de découpe 11.

Tel que mieux visible sur la figure 2, l'élément rotatif de découpe 12 est du type présentant une première extrémité 31 ouverte, une seconde extrémité 32 opposée à la première extrémité 31, avec une paroi de révolution 34 joignant la première extrémité 31 à la seconde extrémité 32. L'élément rotatif de découpe 12 comporte des premiers moyens de découpe 30 portés par la paroi de révolution 34.

Plus particulièrement, les premiers moyens de découpe 30 comportent au moins un organe de tranchage 35 ménageant un passage avec la paroi de révolution 34.

Plus particulièrement encore, les premiers moyens de découpe 30 comportent au moins une série de lames 36 sensiblement perpendiculaires aux génératrices de la paroi de révolution 34 de l'élément rotatif de découpe 12, s'étendant dans le passage.

Dans l'exemple de réalisation illustré sur les figures, l'élément rotatif de découpe comporte deux séries de lames 36 agencées de manière opposée, pour fendre les aliments, ainsi que deux séries d'organes de tranchage 35 agencés de manière opposée, agencées derrière les lames 36 par rapport au sens de rotation de l'élément rotatif de découpe 12, pour trancher les morceaux d'aliments fendus.

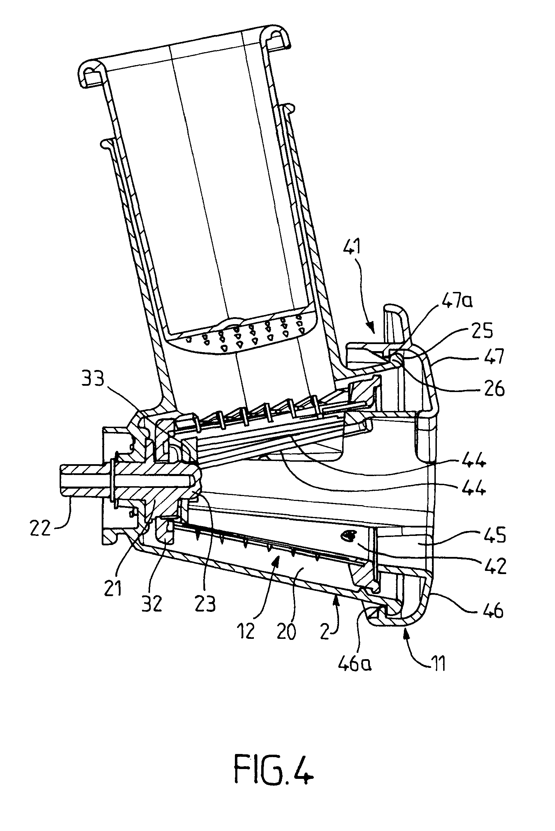

Tel que visible sur la figure 4, l'élément rotatif de découpe 12 comporte des moyens d'accouplement 33 à un dispositif d'entraînement en rotation 21 agencé dans le logement 20. Les moyens d'accouplement 33 sont ménagés dans la seconde extrémité 32 de l'élément rotatif de découpe 12.

Le dispositif d'entraînement en rotation 21 comporte un axe 22 apte à coopérer par l'une de ses extrémités avec la sortie d'entraînement 18 de la base motorisée 1 et portant à l'autre de ses extrémités un organe male 23 adapté pour engrener un orifice d'entraînement femelle formé dans la seconde extrémité 32 de l'élément rotatif de découpe 12 ou dans la seconde extrémité de chacun des autres éléments rotatifs de découpe 13, 14, 15, 16.

Tel que visible sur les figures 3 et 4, l'élément statique de découpe 11 comporte des seconds moyens de découpe 40. L'élément statique de découpe 11 présente une forme permettant son insertion à l'intérieur de l'élément rotatif de découpe 12 monté dans le logement 20 de sorte que les seconds moyens de découpe 40 recoupent au moins une partie des aliments découpés par les premiers moyens de découpe 30. L'élément statique de découpe 11 ménage au moins un passage d'aliments découpés 42 au travers de la première extrémité 31 de l'élément rotatif de découpe 12.

L'élément statique de découpe 11 comporte aussi des moyens de blocage 41 pour venir en prise en position fixe avec le magasin 2. Les moyens de blocage 41 de l'élément statique de découpe 11 sur le magasin 2 sont choisis parmi les catégories suivantes : moyens de blocage par verrouillage, moyens de blocage par encliquetage, moyens de blocage par vissage, moyens de blocage à baïonnette.

Plus particulièrement dans l'exemple de réalisation illustré, les seconds moyens de découpe 40 comportent une série de lames 44 s'étendant longitudinalement entre la première extrémité 31 et la seconde extrémité 32 de l'élément rotatif de découpe 12 lorsque l'outil de découpe 10 est monté dans le logement 20 du magasin 2. L'élément statique de découpe 11 présente un conduit de déversement 45 délimité par une bordure inférieure 46 et un verrou 47 monté pivotant sur la bordure inférieure 46. Le conduit de déversement 45 est au moins partiellement engagé dans le logement 20 lorsque l'élément statique de découpe 11 est monté sur le magasin 2, tel que visible sur la figure 8. Les lames 44 sont montées fixes sur un corps 49 prolongeant la bordure inférieure 46. La bordure inférieure 46 et le verrou 47 comportent chacun un crochet 46a, 47a prévu pour venir en prise avec le rebord périphérique circulaire 25 du magasin 2. Les moyens de blocage 41 de l'élément statique de découpe 11 comprennent ainsi le verrou 47 et la bordure inférieure 46. Le rebord périphérique circulaire 25 forme un épaulement d'accrochage 26 des moyens de blocage 41 de l'élément statique de découpe 11, tel que visible sur la figure 4.

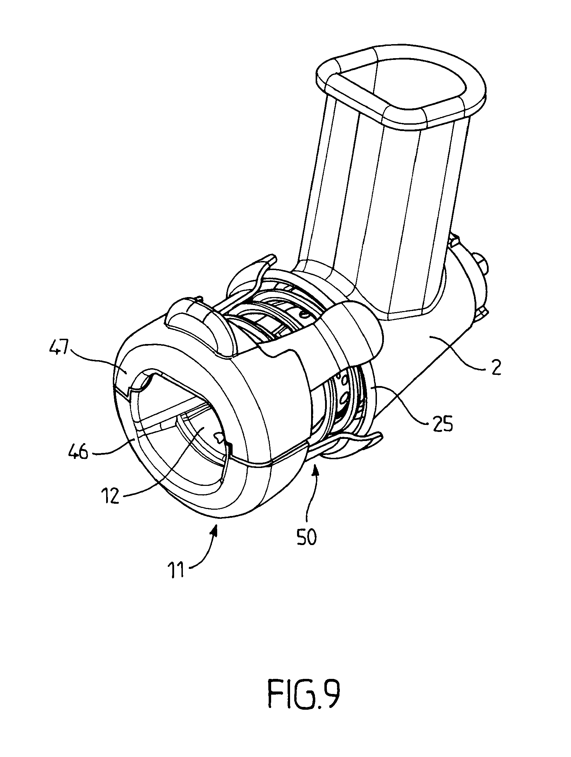

Tel que montré sur les figures 6 et 7, le capot de verrouillage 50 présente une couronne 51 prolongée par quatre bras 52 flexibles présentant des organes de retenue internes 53. Les organes de retenue internes 53 sont prévus pour venir en prise avec le rebord périphérique circulaire 25 du magasin 2 lorsque le capot de verrouillage 50 est monté sur le magasin 2, tel que représenté sur les figures 8 et 9.

Le capot de verrouillage 50 présente ainsi des moyens d'accrochage 55 pour venir en prise avec le magasin 2 en logeant l'élément rotatif de découpe 12 empilé dans au moins un autre élément rotatif de découpe 13, 14, 15, 16, tel que visible sur la figure 8. Dans l'exemple de réalisation illustré sur les figures, les moyens d'accrochage 55 sont formés par les organes de retenue internes 53. Le rebord périphérique circulaire 25 forme un épaulement d'accrochage 27 des moyens d'accrochage 55 du capot de verrouillage 50, tel que montré sur la figure 8.

De plus, le capot de verrouillage 50 peut porter l'élément statique de découpe 11. A cet effet l'élément statique de découpe 11 comporte des moyens de retenue 43 pour venir en prise avec le capot de verrouillage 50 de sorte que les seconds moyens de découpe 40 sont au moins partiellement insérés à l'intérieur de l'élément rotatif de découpe 12. Les moyens de retenue 43 de l'élément statique de découpe 11 sur le capot de verrouillage 50 sont choisis parmi les catégories suivantes : moyens de retenue par verrouillage, moyens de retenue par encliquetage, moyens de retenue par vissage, moyens de retenue à baïonnette.

Le capot de verrouillage 50 présente ainsi une forme permettant l'insertion au moins partielle des seconds moyens de découpe 40 à l'intérieur de l'élément rotatif de découpe 12 ou de l'un des autre éléments rotatifs de découpe 13, 14, 15, 16 empilés et retenus par ledit capot de verrouillage 50 en prise avec le magasin 2. Par ailleurs, la couronne 51 du capot de verrouillage 50 présente une collerette extérieure 54 prévue pour l'accrochage des crochets 46a, 47a de l'élément statique de découpe 11, tel que représenté sur la figure 8.

Plus particulièrement dans l'exemple de réalisation illustré sur les figures, les moyens de retenue 43 correspondent aux moyens de blocage 41. En d'autres termes, les moyens de retenue 43 forment également les moyens de blocage 41, et vice-versa. Ainsi les moyens de retenue 43 comportent le verrou 47 monté pivotant sur la bordure inférieure 46 suivant un axe X-X'. Les moyens de retenue 43 sont issus du conduit de déversement 45 de l'élément statique de découpe 11.

Tel que visible sur la figure 8, les moyens de retenue 43 de l'élément statique de découpe 11 viennent ainsi en prise avec au moins un organe de retenue extérieur 56 formé par la collerette extérieure 54 du capot de verrouillage 50. De ce fait, l'organe de retenue extérieur 56 entoure une extrémité du capot de verrouillage 50. Plus particulièrement, les moyens de retenue 43 viennent en prise avec une partie supérieure du capot de verrouillage 50, ainsi qu'avec une partie inférieure du capot de verrouillage 50. Tel que visible sur la figure 8, le crochet 46a de la bordure inférieure 46 et le crochet 47a du verrou 47 viennent en prise avec la collerette extérieure 54. Les moyens de retenue 43 comprennent ainsi le verrou 47 et la bordure inférieure 46.

L'appareil selon l'invention fonctionne et s'utilise de la manière suivante.

Pour réaliser une découpe en morceaux ou en cubes, l'utilisateur monte le magasin 2 sur la base motorisée 1 puis met en place l'élément rotatif de découpe 12 dans le magasin 2. L'utilisateur met ensuite en place l'élément statique de découpe 11 dans le magasin 2 avec le verrou 47 pivoté tel que montré sur la figure 3, de sorte que le crochet 46a de la bordure inférieure 46 vienne en prise avec la partie inférieure du rebord périphérique circulaire 25 du magasin 2, tel que visible sur la figure 4. L'utilisateur pivote ensuite le verrou 47, de sorte que le crochet 47a vienne en prise avec la partie supérieure du rebord périphérique circulaire 25 du magasin 2. Pour faciliter la retenue du crochet 46a de la bordure inférieure 46, la partie inférieure du rebord périphérique circulaire 25 présente un méplat ; pour faciliter la mise en place et le retrait du crochet 47a du verrou 47, la partie supérieure du rebord périphérique circulaire 25 est arrondie de chaque côté, tel que visible sur la figure 4.

Pour réaliser d'autres types de découpe, l'utilisateur met en place un autre élément rotatif de découpe 13, 14, 15, 16 dans le magasin 2.

Pour ranger les différents accessoires de découpe d'aliments, l'utilisateur empile d'abord les autres éléments rotatifs de découpe 13, 14, 15, 16 puis l'élément rotatif de découpe 12 dans le magasin 2, met en place le capot de verrouillage 50 sur le magasin 2, puis met ensuite en place l'élément statique de découpe 11 dans le capot de verrouillage 50 avec le verrou 47 pivoté tel que montré sur la figure 3, de sorte que le crochet 46a de la bordure inférieure 46 vienne en prise avec la partie inférieure de la collerette extérieure 54 du capot de verrouillage 50, tel que visible sur la figure 8. L'utilisateur pivote ensuite le verrou 47, de sorte que le crochet 47a vienne en prise avec la partie supérieure de la collerette extérieure 54 du capot de verrouillage 50. La partie supérieure et la partie inférieure du rebord périphérique circulaire 25 sont arrondies de chaque côté. Les moyens de retenue 43 utilisés en configuration de rangement ne nécessitent pas un maintien aussi ferme que les moyens de blocage 41 utilisés en configuration de travail.

A titre de variante, le magasin 2 n'est pas nécessairement monté amovible sur la base motorisée 1.

A titre de variante, les accessoires de découpe d'aliments 3 comportent au moins un autre élément rotatif de découpe 13, 14, 15, 16.

A titre de variante, le ou au moins l'un des autres éléments rotatifs de découpe 13, 14, 15, 16 pourrait être empilé dans l'élément rotatif de découpe 12 en configuration de rangement.

A titre de variante, les premiers moyens de découpe 30 ne sont pas nécessairement de type coupe-frites et pourraient notamment être formés par une lame ; les seconds moyens de découpe 40 pourraient notamment être formés par une grille, pour réaliser une découpe en cubes ou en morceaux.

A titre de variante, le dispositif d'entraînement en rotation 21 n'est pas nécessairement solidaire du magasin, mais pourrait notamment être issu de la base motorisée 1.

A titre de variante, les moyens de retenue 43 ne sont pas nécessairement identiques aux moyens de blocage 41. Notamment les moyens de retenue 43 pourraient comporter des organes de retenue différents des organes de blocage des moyens de blocage 41, du fait que l'élément statique de découpe 11 agencé dans l'élément rotatif de découpe 12 ne nécessite pas un maintien aussi ferme en configuration de rangement lorsque monté sur le capot de verrouillage 50 qu'en configuration de travail lorsque monté sur le magasin 2.

La présente invention n'est nullement limitée à l'exemple de réalisation décrit, mais englobe de nombreuses modifications dans le cadre des revendications.

## Revendications

1. Appareil électroménager de découpe d'aliments comportant une base motorisée (1) solidaire d'un magasin (2) pour recevoir un outil de découpe (10) comportant un élément rotatif de découpe (12) et un élément statique de découpe (11), l'élément rotatif de découpe (12) comportant des premiers moyens de découpe (30) et des moyens d'accouplement (33) à un dispositif d'entraînement en rotation (21) agencé dans le logement (20), l'élément statique de découpe (11) comportant des seconds moyens de découpe (40) et des moyens de blocage (41) pour venir en prise en position fixe avec le magasin (2), l'élément statique de découpe (11) présentant une forme permettant son insertion à l'intérieur de l'élément rotatif de découpe (12) monté dans le logement (20) de sorte que les seconds moyens de découpe (40) recoupent au moins une partie des aliments découpés par les premiers moyens de découpe (30), **caractérisé en ce que** l'appareil comporte un capot de verrouillage (50) présentant des moyens d'accrochage (55) pour venir en prise avec le magasin (2) en logeant l'élément rotatif de découpe (12) empilé dans au moins un autre élément rotatif de découpe (13, 14, 15, 16), et **en ce que** l'élément statique de découpe (11) comporte des moyens de retenue (43) pour venir en prise avec le capot de verrouillage (50) de sorte que les seconds moyens de découpe (40) sont au moins partiellement insérés à l'intérieur de l'élément rotatif de découpe (12).

2. Appareil électroménager de découpe d'aliments selon la revendication 1, **caractérisé en ce que** les moyens de retenue (43) viennent en prise avec au moins un organe de retenue extérieur (56) du capot de verrouillage (50).

3. Appareil électroménager de découpe d'aliments selon la revendication 2, **caractérisé en ce que** les moyens de retenue (43) viennent en prise avec une partie supérieure du capot de verrouillage (50).

4. Appareil électroménager de découpe d'aliments selon l'une des revendications 2 ou 3, **caractérisé en ce que** l'organe de retenue extérieur (56) entoure une extrémité du capot de verrouillage (50).

5. Appareil électroménager de découpe d'aliments selon l'une des revendications 1 à 4, **caractérisé en ce que** l'élément statique de découpe (11) présente un conduit de déversement (45).

6. Appareil électroménager de découpe d'aliments selon la revendication 5, **caractérisé en ce que** les moyens de retenue (43) sont issus du conduit de déversement (45) de l'élément statique de découpe (11).

7. Appareil électroménager de découpe d'aliments selon l'une des revendications 5 ou 6, **caractérisé en ce que** le conduit de déversement (45) est délimité par une bordure inférieure (46) et un verrou (47) monté pivotant sur la bordure inférieure (46) suivant un axe X-X', et **en ce que** les moyens de retenue (43) comprennent le verrou (47).

8. Appareil électroménager de découpe d'aliments selon l'une des revendications 1 à 7, **caractérisé en ce que** les moyens de retenue (43) comprennent la bordure inférieure (46).

9. Appareil électroménager de découpe d'aliments selon l'une des revendications 1 à 8, **caractérisé en ce que** les moyens de retenue (43) de l'élément statique de découpe (11) sur le capot de verrouillage (50) sont choisis parmi les catégories suivantes : moyens de retenue par verrouillage, moyens de retenue par encliquetage, moyens de retenue par vissage, moyens de retenue à baïonnette.

10. Appareil électroménager de découpe d'aliments selon l'une des revendications 1 à 9, **caractérisé en ce que** les moyens de retenue (43) forment également les moyens de blocage (41).

11. Appareil électroménager de découpe d'aliments selon l'une des revendications 1 à 10, **caractérisé en ce que** les seconds moyens de découpe (40) comportent une série de lames (44) s'étendant longitudinalement entre la première extrémité (31) et la seconde extrémité (32) de l'élément rotatif de découpe (12) lorsque l'outil de découpe (10) est monté dans le logement (20) du magasin (2).

12. Appareil électroménager de découpe d'aliments selon l'une des revendications 1 à 11, **caractérisé en ce que** les premiers moyens de découpe (30) comportent au moins un organe de tranchage (35).

13. Appareil électroménager de découpe d'aliments selon l'une des revendications 1 à 12, **caractérisé en ce que** les premiers moyens de découpe (30) comportent au moins une série de lames (36) sensiblement perpendiculaires aux génératrices de la paroi de révolution (34) de l'élément rotatif de découpe (12).

14. Appareil électroménager de découpe d'aliments selon l'une des revendications 1 à 13, **caractérisé en ce que** le dispositif d'entraînement en rotation (21) comporte un axe (22) apte à coopérer par l'une de ses extrémités avec une sortie d'entraînement (18) de la base motorisée (1) et portant à l'autre de ses extrémités un organe male (23) adapté pour engrener un orifice d'entraînement femelle formé dans la seconde extrémité (32) de l'élément rotatif de découpe (12).

15. Appareil électroménager de découpe d'aliments selon l'une des revendications 1 à 14, **caractérisé en ce que** le magasin (2) présente une extrémité ouverte (24) par laquelle l'outil de découpe (10) est inséré, ladite extrémité ouverte (24) comportant un rebord périphérique circulaire (25) formant un épaulement d'accrochage (26) des moyens de blocage de l'élément statique de découpe (11).

## Patentansprüche

1. Elektrohaushaltsgerät zum Zerkleinern von Lebensmitteln mit einer motorisierten Basis (1), die mit einem Magazin (2) zur Aufnahme eines Zerkleinerungswerkzeugs (10) fest verbunden ist, das ein drehbares Zerkleinerungselement (12) und ein statisches Zerkleinerungselement (11) umfasst, wobei das drehbare Zerkleinerungselement (12) erste Zerkleinerungsmittel (30) und Mittel (33) zur Kopplung an eine Drehantriebsvorrichtung (21) umfasst, die in der Aufnahme (20) angeordnet ist, wobei das statische Zerkleinerungselement (11) zweite Zerkleinerungsmittel (40) und Arretierungsmittel (41) umfasst, die in der feststehenden Position mit dem Magazin (2) in Eingriff kommen, wobei das statische Zerkleinerungselement (11) eine Form aufweist, aufgrund der es in das Innere des drehbaren Zerkleinerungselements (12) eingeführt werden kann, das in der Aufnahme (20) derart montiert ist, dass die zweiten Zerkleinerungsmittel (40) zumindest einen Teil der Lebensmittel erneut zerkleinern, die von den ersten Zerkleinerungmitteln (30) zerkleinert wurden, **dadurch gekennzeichnet, dass** das Gerät eine Verriegelungskappe (50) umfasst, die Einrastmittel (55) aufweist, die mit dem Magazin (2) in Eingriff kommen, indem sie das drehbare Zerkleinerungselement (12) aufnehmen, das in zumindest einem weiteren drehbaren Zerkleinerungselement (13, 14, 15, 16) gestapelt ist, und **gekennzeichnet dadurch, dass** das statische Zerkleinerungselement (11) Rückhaltemittel (43) umfasst, die mit der Verriegelungskappe (50) derart in Eingriff kommen, dass die zweiten Zerkleinerungsmittel (40) zumindest teilweise in das drehbare Zerkleinerungselement (12) eingesetzt werden.

2. Elektrohaushaltsgerät zum Zerkleinern von Lebensmitteln nach Anspruch 1, **dadurch gekennzeichnet, dass** die Rückhaltemittel (43) mit zumindest einem äußeren Rückhalteelement (56) der Verriegelungskappe (50) in Eingriff kommen.

3. Elektrohaushaltsgerät zum Zerkleinern von Lebensmitteln nach Anspruch 2, **dadurch gekennzeichnet, dass** die Rückhaltemittel (43) mit einem oberen Teil der Verriegelungskappe (50) in Eingriff kommen.

4. Elektrohaushaltsgerät zum Zerkleinern von Lebensmitteln nach einem der Ansprüche 2 oder 3, **dadurch gekennzeichnet, dass** das äußere Rückhalteelement (56) ein Ende der Verriegelungskappe (50) umschließt.

5. Elektrohaushaltsgerät zum Zerkleinern von Lebensmitteln nach einem der Ansprüche 1 bis 4, **dadurch gekennzeichnet, dass** das statische Zerkleinerungselement (11) einen Ausgabekanal (45) aufweist.

6. Elektrohaushaltsgerät zum Zerkleinern von Lebensmitteln nach Anspruch 5, **dadurch gekennzeichnet, dass** die Rückhaltemittel (43) vom Ausgabekanal (45) des statischen Zerkleinerungselements (11) ausgehen.

7. Elektrohaushaltsgerät zum Zerkleinern von Lebensmitteln nach einem der Ansprüche 5 oder 6, **dadurch gekennzeichnet, dass** der Ausgabekanal (45) durch einen unteren Rand (46) und einen Riegel (47) begrenzt wird, der entlang einer Achse X-X' schwenkbar auf dem unteren Rand (46) montiert ist, und dass der Riegel (47) zu den Rückhaltemitteln (43) gehört.

8. Elektrohaushaltsgerät zum Zerkleinern von Lebensmitteln nach einem der Ansprüche 1 bis 7, **dadurch gekennzeichnet, dass** der untere Rand (46) zu den Rückhaltemitteln (43) gehört.

9. Elektrohaushaltsgerät zum Zerkleinern von Lebensmitteln nach einem der Ansprüche 1 bis 8, **dadurch gekennzeichnet, dass** die Rückhaltemittel (43) des statischen Zerkleinerungselements (11) auf der Verriegelungskappe (50) aus den folgenden Kategorien ausgewählt werden: Rückhaltemittel durch Verriegeln, Rückhaltemittel durch Einrasten, Rückhaltemittel durch Schrauben und Bajonett-Rückhaltemittel.

10. Elektrohaushaltsgerät zum Zerkleinern von Lebensmitteln nach einem der Ansprüche 1 bis 9, **dadurch gekennzeichnet, dass** die Rückhaltemittel (43) außerdem die Arretierungsmittel (41) bilden.

11. Elektrohaushaltsgerät zum Zerkleinern von Lebensmitteln nach einem der Ansprüche 1 bis 10, **dadurch gekennzeichnet, dass** die zweiten Zerkleinerungsmittel (40) eine Reihe von Klingen (44) umfassen, die sich in Längsrichtung zwischen dem ersten Ende (31) und dem zweiten Ende (32) des drehbaren Zerkleinerungselements (12) erstrecken, wenn das Zerkleinerungswerkzeug (10) in die Aufnahme (20) des Magazins (2) eingesetzt wird.

12. Elektrohaushaltsgerät zum Zerkleinern von Lebensmitteln nach einem der Ansprüche 1 bis 11, **dadurch gekennzeichnet, dass** die ersten Zerkleinerungsmittel (30) zumindest ein Schneidelement (35) umfassen.

13. Elektrohaushaltsgerät zum Zerkleinern von Lebensmitteln nach einem der Ansprüche 1 bis 12, **dadurch gekennzeichnet, dass** die ersten Zerkleinerungsmittel (30) zumindest eine Reihe von Klingen (36) umfassen, die im Wesentlichen senkrecht zu den Kanten der umlaufenden Wand (34) des drehbaren Zerkleinerungselements (12) stehen.

14. Elektrohaushaltsgerät zum Zerkleinern von Lebensmitteln nach einem der Ansprüche 1 bis 13, **dadurch gekennzeichnet, dass** die Drehantriebsvorrichtung (21) eine Achse (22) aufweist, die dazu geeignet ist, durch eines ihrer Enden mit einem Antriebsausgang (18) der motorisierten Basis (1) zusammenzuwirken, und die an ihrem anderen Ende ein Steckelement (23) trägt, das dazu geeignet ist, in eine Antriebsöffnung einzugreifen, die in dem zweiten Ende (32) des drehbaren Zerkleinerungselements (12) ausgebildet ist.

15. Elektrohaushaltsgerät zum Zerkleinern von Lebensmitteln nach einem der Ansprüche 1 bis 14, **dadurch gekennzeichnet, dass** das Magazin (2) ein offenes Ende (24) aufweist, durch das das Zerkleinerungswerkzeug (10) eingesetzt wird, wobei das genannte offene Ende (24) einen umlaufenden kreisförmigen Rand (25) umfasst, der einen Einrastvorsprung (26) der Arretierungsmittel des statischen Zerkleinerungselements (11) bildet.

## Claims

1. Food cutting household electrical appliance comprising a motorised base (1) attached to a magazine (2) for receiving a cutting tool (10) comprising a rotary cutting element (12) and a static cutting element (11), the rotary cutting element (12) comprising first cutting means (30) and means (33) for coupling to a rotational drive device (21) arranged in the housing (20), the static cutting element (11) comprising second cutting means (40) and locking means (41) for engaging in a fixed position with the magazine (2), the static cutting element (11) having a shape allowing it to be inserted inside the rotary cutting element (12) mounted in the housing (20) so that the second cutting means (40) overlap at least some of the foods cut by the first cutting means (30) **characterised in that** the appliance comprises a locking cover (50) having hooking means (55) for engaging with the magazine (2) by accommodating the rotary cutting element (12) stacked in at least one other rotary cutting element (13, 14, 15, 16), and **in that** the static cutting element (11) comprises retaining means (43) for engaging with the locking cover (50) so that the second cutting means (40) are at least partially inserted inside the rotary cutting element (12).

2. Food cutting household electrical appliance according to claim 1, **characterised in that** the retaining means (43) engage with at least one outer retaining member (56) of the locking cover (50).

3. Food cutting household electrical appliance according to claim 2, **characterised in that** the retaining means (43) engage with an upper portion of the locking cover (50).

4. Food cutting household electrical appliance according to claim 2 or 3, **characterised in that** the outer retaining member (56) surrounds one end of the locking cover (50).

5. Food cutting household electrical appliance according to one of claims 1 to 4, **characterised in that** the static cutting element (11) has a discharge pipe (45).

6. Food cutting household electrical appliance according to claim 5, **characterised in that** the retaining means (43) come from the discharge pipe (45) of the static cutting element (11).

7. Food cutting household electrical appliance according to claim 5 or 6, **characterised in that** the discharge pipe (45) is bounded by a lower edge (46) and a latch (47) pivotally mounted on the lower edge (46) along an axis X-X', and **in that** the retaining means (43) comprise the latch (47).

8. Food cutting household electrical appliance according to one of claims 1 to 7, **characterised in that** the retaining means (43) comprise the lower edge (46).

9. Food cutting household electrical appliance according to one of claims 1 to 8, **characterised in that** the retaining means (43) of the static cutting element (11) on the locking cover (50) are selected from the following categories: retaining means by locking, retaining means by clipping, retaining means by screwing, retaining means by bayonet.

10. Food cutting household electrical appliance according to one of claims 1 to 9, **characterised in that** the retaining means (43) also form the locking means (41).

11. Food cutting household electrical appliance according to one of claims 1 to 10, **characterised in that** the second cutting means (40) comprise a series of blades (44) extending longitudinally between the first end (31) and the second end (32) of the rotary cutting element (12) when the cutting tool (10) is mounted in the housing (20) of the magazine (2).

12. Food cutting household electrical appliance according to one of claims 1 to 11, **characterised in that** the first cutting means (30) comprise at least one slicing member (35).

13. Food cutting household electrical appliance according to one of claims 1 to 12, **characterised in that** the first cutting means (30) comprise at least one series of blades (36) substantially perpendicular to the generatrices of the wall of revolution (34) of the rotary cutting element (12).

14. Food cutting household electrical appliance according to one of claims 1 to 13, **characterised in that** the rotational drive device (21) comprises a pin (22) capable of cooperating by one of its ends with a drive output (18) of the motorised base (1) and carrying at its other end a male member (23) adapted to engage a female drive hole formed in the second end (32) of the rotary cutting element (12).

15. Food cutting household electrical appliance according to one of claims 1 to 14, **characterised in that** the magazine (2) has an open end (24) through which the cutting tool (10) is inserted, said open end (24) comprising a circular peripheral edge (25) forming a shoulder (26) for latching the locking means of the static cutting element (11).
